(19) Europäisches Patentamt / European Patent Office / Office européen des brevets

(11) **EP 4 176 298 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **20757238.9**

(22) Anmeldetag: **05.08.2020**

(51) Internationale Patentklassifikation (IPC):
**G02B 21/00** *(2006.01)* **G02B 21/16** *(2006.01)*
**G02B 21/36** *(2006.01)* **G01N 21/64** *(2006.01)*

(52) Gemeinsame Patentklassifikation (CPC):
**G02B 21/16; G01N 21/6458; G02B 21/0076; G02B 21/365;** G01N 2021/6419; G01N 2021/6421; G01N 2021/6441

(86) Internationale Anmeldenummer:
**PCT/EP2020/072057**

(87) Internationale Veröffentlichungsnummer:
**WO 2022/028694 (10.02.2022 Gazette 2022/06)**

(54) **VERFAHREN ZUR BELEUCHTUNGSEINSTELLUNG BEI EINEM FLUORESZENZMIKROSKOP UND ENTSPRECHENDES FLUORESZENZMIKROSKOP**

METHOD FOR ADJUSTING THE ILLUMINATION IN A FLUORESCENCE MICROSCOPE, AND CORRESPONDING FLUORESCENCE MICROSCOPE

PROCÉDÉ DE RÉGLAGE DE L'ÉCLAIRAGE DANS UN MICROSCOPE À FLUORESCENCE ET MICROSCOPE À FLUORESCENCE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.05.2023 Patentblatt 2023/19**

(73) Patentinhaber: **Leica Microsystems CMS GmbH 35578 Wetzlar (DE)**

(72) Erfinder:
• **SCHUMANN, Christian 35578 Wetzlar (DE)**
• **DEISSLER, Benjamin 35578 Wetzlar (DE)**
• **RITSCHEL, Kai 35578 Wetzlar (DE)**

(74) Vertreter: **Schaumburg und Partner Patentanwälte mbB Mauerkircherstraße 31 81679 München (DE)**

(56) Entgegenhaltungen:
EP-A2- 1 598 688     EP-A2- 1 795 938
EP-A2- 2 253 983     WO-A2-02/01222
US-A1- 2018 196 246     US-B2- 10 200 625

**Beschreibung**

Beschreibung

Die vorliegende Erfindung betrifft ein Verfahren zum automatischen Ermitteln von einzustellenden Beleuchtungshelligkeiten von mindestens zwei Lichtquellen zur Anregung jeweils mindestens eines Fluorophors in einer in einem Fluoreszenzmikroskop abzubildenden Probe sowie ein entsprechendes Fluoreszenzmikroskop.

Hintergrund

In der Fluoreszenzmikroskopie werden mit Fluorophoren gefärbte Proben mikroskopisch abgebildet. Fluorophore sind Farbstoffe, die durch die Frequenz eines Anregungslichts angeregt werden, ihrerseits Strahlung abzugeben. Typischerweise benötigt man für jedes Fluorophor eine Lichtquelle geeigneter Wellenlänge oder eine Lichtquelle, aus deren Emissionsspektrum die geeignete Wellenlänge gefiltert wird. Das von der Probe emittierte Fluoreszenzlicht wird von einem geeigneten Detektor aufgenommen. Hierbei wird typischerweise die Fluoreszenzstrahlung jedes Fluorophors getrennt detektiert. Dies wiederum kann durch einzelne Detektoren mit entsprechend schmalbandiger Sensitivität oder mit einem breitbandigeren Detektor mit vorgeschaltetem Filter, das nur die Wellenlänge der betreffenden Fluoreszenzstrahlung passieren lässt, geschehen. Bezüglich weiterer Einzelheiten zum Aufbau und zur Funktionsweise eines Fluoreszenzmikroskops wird auf die betreffende Literatur verwiesen. Fluoreszenzmikroskope werden insbesondere zur Untersuchung von insbesondere lebenden Zellen eingesetzt.

Aus der US 10,200,625 B2 sind eine System und ein Verfahren zur Abbildung biologischer Proben in einem Kulturmedium bekannt. Zunächst wird ein Bild der Probe mit voreingestellten Werten aufgenommen. Das System ermittelt dann pixelweise gesättigte Pixel und ein Signal-zu-Rauschverhältnis. Wenn die Anzahl gesättigter Pixel oberhalb eines bestimmten Schwellwertes oder das Signal-zu-Rauschverhältnis für das betreffende Pixel unterhalb eines vorbestimmten Schwellenwertes ist, wird ein neues Bild aufgenommen, wobei hierzu neue Werte des Photonenflusses und/oder der Belichtungszeit eingestellt werden. Dieses Verfahren wird solange wiederholt, bis für die nicht gesättigten Pixel ein vordefinierter Schwellenwert des Signal-zu-Rauschverhältnisses erreicht ist oder bis eine vorgegebene maximale Bildaufnahmedauer abgelaufen ist. Mit Photonenfluss wird in der genannten Schrift die Lichtstärke ("Light Intensity") bezeichnet. Sie bezeichnet die Anzahl der Photonen, die pro Flächen- und Zeiteinheit den Sensor der Kamera erreichen. Die Belichtungszeit ("Exposure Time") ist die Zeit, über die der Sensor der Kamera das Signal integriert.

Mittels dieses oder eines anderen bekannten Verfahrens kann ein Benutzer nunmehr in einem Fluoreszenzmikroskop die Beleuchtungshelligkeiten der vorhandenen Lichtquellen zur Anregung der betreffenden Fluorophore einstellen. Es hat sich gezeigt, dass dieses Verfahren, insbesondere für den ungeübten Benutzer, sich aufwendig und langwierig gestaltet und zumeist nicht zu der gewünschten hohen Bildqualität führt.

Die EP 1 795 938 A1 beschäftigt sich mit einem ähnlichen Verfahren, bei dem eine Lichtquelle mit einem größeren Wellenlängenbereich verwendet wird, und bei dem über ein Auswahlmittel ein bestimmten Wellenlängenbereich oder eine bestimmte Wellenlänge auszuwählt werden kann. Es wird die Wellenlänge verstellt, um die Intensität von von der Probe reflektiertem Licht (als Regelgröße) zu maximieren. Die WO 02/01222 A2 beschäftigt sich mit einer ähnlichen Thematik. Dort werden extrem enge Spektralbänder verwendet, um ein Übersprechen zu vermeiden.

Es besteht somit ein Bedürfnis nach einer benutzerfreundlichen, insbesondere automatisch ablaufenden Einstellung von Mikroskopparametern, wie der Beleuchtungshelligkeit einer Anregungslichtquelle, in einem Fluoreszenzmikroskop.

Zusammenfassung des erfinderischen Konzepts

Die Erfinder haben festgestellt, dass eine der Ursachen für die Schwierigkeit der optimalen Einstellung der Mikroskopparameter in der Fluoreszenzmikroskopie das Vorhandensein von Übersprechen bei der Detektion mehrerer Farbstoffe/Fluorophore in verschiedene Detektionskanäle und die Kreuzanregung mehrerer Farbstoffe/Fluorophore durch verschiedene Lichtquellen darstellen. Im Folgenden soll das Übersprechen in verschiedene Detektionskanäle auch mit "Cross-Emission" (kann auch als "Cross-Talk" der Detektoren bezeichnet werden) und die Kreuzanregung von Fluorophoren durch verschiedene Lichtquellen mit "Cross-Excitation" bezeichnet werden.

Ausführungsformen des erfindungsgemäßen Konzepts umfassen ein Verfahren zum automatischen Ermitteln von einzustellenden Beleuchtungshelligkeiten von mindestens zwei Lichtquellen zur Anregung jeweils mindestens eines Fluorophors in einer in einem Fluoreszenzmikroskop abzubildenden Probe, wobei jede der mindestens zwei Lichtquellen einzeln bezüglich ihrer Beleuchtungshelligkeit ansteuerbar ist, und wobei mindestens zwei Detektoren jeweils eine Bildintensität der mikroskopisch abgebildeten Probe detektieren, wobei die einzustellenden Beleuchtungshelligkeiten der mindestens zwei Lichtquellen automatisch derart ermittelt werden, dass ein vorgegebener Sollwert eines Signal-zu-Rauschverhältnisses pro Fluorophor erreicht wird, wobei zur Ermittlung der Beleuchtungshelligkeiten der mindestens zwei Lichtquellen ein Übersprechen eines Detektors für unterschiedliche Emissionsspektren der Fluorophore und/oder eine Kreuzanregung eines Fluorophors für unterschiedliche Beleuchtungsspektren der Lichtquellen berücksichtigt wird.

Bei diesem erfindungsgemäßen Konzept umfasst der Begriff "Lichtquelle" jede lichtemittierende Anordnung, die zur Anregung eines Fluorophors, auch als Farbstoff bezeichnet, geeignet ist. Zur Anregung eines Fluorophors ist es notwendig, dass eine vorbestimmte Anregungswellenlänge in dem Spektrum der Lichtquelle vorhanden ist. Somit kann die anmeldungsgemäße "Lichtquelle" eine breitbandige Lichtquelle, die die Anregungswellenlänge enthält, eine schmalbandige Lichtquelle, die die Anregungswellenlänge enthält, oder eine Lichtquelle mit nachgeschaltetem Filter, das aus dem Spektrum der Lichtquelle ein Spektrum filtert, das die Anregungswellenlänge enthält, umfassen. Analoges gilt umgekehrt für den anmeldungsgemäßen "Detektor". Dieser muss in der Lage sein, die Wellenlänge der emittierten Fluoreszenzstrahlung des betreffenden Fluorophors zu detektieren. Hierzu kann ein entsprechend breitbandiger Detektor zum Einsatz kommen oder ein entsprechend schmalbandiger Detektor, der für die entsprechende Wellenlänge der Fluoreszenzstrahlung ausreichende Sensitivität besitzt. Weiterhin kann ein breitbandiger Detektor mit einem vorgeschalteten Filter zum Einsatz kommen, wobei das Filter die betreffende Wellenlänge der Fluoreszenzstrahlung filtert und dem Sensor des Detektors zugänglich macht. Die genannten Filter, die den Lichtquellen nach- bzw. den Detektoren vorgeschaltet sind, können als Filterrad oder als Filterschieber ausgebildet sein, als spektrale Teilerschichten, Spektrometer- oder Monochromatoranordnungen oder aber auch z. B. in Form von akustooptischen oder flüssigkristall basierten Systemen.

Jede anmeldungsgemäße Lichtquelle ist zur direkten Anregung eines Fluorophors vorgesehen, von dem der Benutzer annimmt, dass dieses in der abzubildenden Probe vorhanden ist. Jede dieser Lichtquellen ist in ihrer Beleuchtungshelligkeit einzeln einstellbar. Somit kann der auf das direkt zugeordnete Fluorophor auftreffende Photonenfluss und somit auch der resultierende Photonenfluss aus der Fluoreszenzstrahlung, die schließlich auf den Detektor trifft, eingestellt werden. Gemäß erfindungsgemäßem Konzept wird bei dieser Einstellung berücksichtigt, dass eine bestimmte Lichtquelle aufgrund ihres ausgestrahlten Spektrums nicht nur das ihr direkt zugeordnete Fluorophor anregt, sondern auch - in gewissem Maße - andere in der Probe vorhandene Fluorophore. Wie weiter unten erläutert, kann diese Cross-Excitation dadurch berücksichtigt werden, dass sie während des Prozesses der Einstellung der Beleuchtungshelligkeiten ermittelt wird.

Alternativ oder zusätzlich wird zur Ermittlung der Beleuchtungshelligkeiten der mindestens zwei anmeldungsgemäßen Lichtquellen berücksichtigt, dass ein einem bestimmten Fluorophor zugeordneter anmeldungsgemäßer Detektor aufgrund seines Sensitivitätsspektrums auch - in gewissem Maße - Fluoreszenzstrahlung von anderen Fluorophoren detektiert. Diese "Cross-Emission" kann, wie weiter unten erläutert, berücksichtigt werden, indem der Grad dieses Übersprechens während der Einstellung der Beleuchtungshelligkeiten der Lichtquellen ermittelt wird.

Zusammenfassend werden nach dem erfindungsgemäßen Konzept folglich die Beleuchtungshelligkeiten der Lichtquellen derart eingestellt, dass unter Berücksichtigung von "Cross-Emission" und/oder "Cross-Excitation" ein vorgegebener Sollwert eines Signal-zu-Rauschverhältnisses pro Fluorophor erreicht wird. Somit wird nach dem vorliegenden erfindungsgemäßen Konzept dem Benutzer weitestgehend eine langwierige und komplexe Einstellung der Mikroskopparameter in der Fluoreszenzmikroskopie abgenommen. Die Implementation des Konzepts mittels eines schnell konvergenten Algorithmus minimiert auch die Anzahl der aufzunehmenden Bilder, und damit die Lichtbelastung von bleichempfindlichen Proben sowie Phototoxizität bei der Lebendzellmikroskopie.

Es sei angemerkt, dass der Begriff "ermitteln" sowohl "berechnen" als auch "experimentell bestimmen" als auch Mischformen davon umfassen soll. Hierunter kann auch ein "Abschätzen" fallen, wenn die mathematischen Modelle zu komplex sind und daher eine Abschätzung schneller zum Ziel führt. Auch ein "Abschätzen" im Sinne einer statistischen Schätzung kann gemeint sein.

In der Fluoreszenzmikroskopie kann beispielsweise mit verschiedenen Parametern gearbeitet werden, deren Zielwerte von einem Benutzer und/oder von dem System vorgegeben und schließlich vom System selbst eingestellt werden können. Mögliche Parameter sind "Geschwindigkeit", nämlich die Geschwindigkeit der Bildgebung, die insbesondere durch die Einstellung der Belichtungszeit beeinflusst wird. Weiterhin die "Bildqualität", die maßgeblich durch das Signal-zu-Rauschverhältnis des Bildes beeinflusst wird. Eine Hauptrolle spielt hierbei die Anzahl der detektierten Photonen bzw. der erzeugten Photoelektronen, die einem Fluorophor zugeordnet werden können. Da Photonen der Poisson-Statistik folgen, ist das Signal-zu-Rauschverhältnis im wesentlichen proportional zur Quadratwurzel der detektierten Photoelektronen, die einem Fluorophor zugeordnet werden können, und somit zur Quadratwurzel der detektierten Bildintensität pro Fluorophor. Ein weiterer möglicher Parameter ist die "Probenbelastung". Ein Zeichen für die Probenbelastung durch die Beleuchtung der zu untersuchenden Probe ist Bleichen.

Ein für das erfindungsgemäße Konzept besonders vorteilhafter Ansatz ist es, bei konstanter Geschwindigkeit der Bildgebung die Bildqualität zu optimieren und die Probenbelastung als Abbruchkriterium zu nutzen. Weitere Ausführungen hierzu finden sich weiter unten in der Beschreibung. Zunächst soll auf die Optimierung der Bildqualität näher eingegangen werden.

Es ist vorgesehen, das Signal-zu-Rauschverhältnis pro Fluorophor in Abhängigkeit von mindestens einer von mindestens einem der Detektoren detektierten Bildintensität pro Fluorophor zu ermitteln, wobei aufgrund des vorhandenen Übersprechens der Detektoren es noch vorteilhafter ist, möglichst viele, insbesondere alle von den Detektoren pro Fluorophor detektierten Bildintensitäten heranzuziehen. Mit anderen Worten wird somit insbesondere die detektierte Bildintensität pro Fluorophor über die vorhandenen Detektoren integriert.

Weiter ist es vorgesehen, alternativ oder besser noch zusätzlich zu dem genannten Übersprechen der Detektoren bei der Ermittlung des Signal-zu-Rauschverhältnisses pro Fluorophor die Kreuzanregung der Fluorophore zu berücksichtigen, indem die von einem der Detektoren detektierte Bildintensität pro Fluorophor auch aufgrund der Anregung des jeweiligen Fluorophors durch die verschiedenen vorhandenen Lichtquellen ermittelt wird. Somit wird nicht nur die dem betreffenden Fluorophor direkt zugeordnete Anregungslichtquelle berücksichtigt, sondern auch die Spektren der übrigen Lichtquellen. Mit anderen Worten wird die detektierte Bildintensität pro Fluorophor über die vorhandenen Lichtquellen integriert.

Im Folgenden sollen diese vorteilhaften Ausgestaltungen des erfindungsgemäßen Konzepts mathematisch beschrieben werden.

Das System umfasse K Lichtquellen k mit k = 0,..., K -1, I Detektoren i mit i = 0,..., I - 1 sowie J Fluorophore j mit j = 0,..., J -1. Die Anzahl der Kanäle l, also aller möglichen Verbindungen von Lichtquellen mit Detektoren, ist dann L=K*I mit l = 0,..., L-1. Die Intensität $I_l$ eines Pixels des Kanals l ist dann

$$I_l = \tau \cdot \sum_{j=0}^{J-1} M_{lj} c_j \qquad (1)$$

mit der Belichtungszeit $\tau$, der Mixing-Matrix $M_{lj}$ und den Fluorophorkonzentrationen $c_j$ der $J$ Fluorophore. Die Einträge der Mixing-Matrix werden durch Cross-Excitation und Cross-Emission bestimmt als

$$M_{lj} = \int Em_j(\lambda) \cdot Sens_{i(l)}(\lambda) d\lambda \cdot \int Exc_j(\lambda') \cdot Ill_l(\lambda') d\lambda' \qquad (2)$$

mit dem Emissionsspektrum $Em_j(\lambda)$ und dem Anregungsspektrum $Exc_j(\lambda')$ des Fluorophors $j$, sowie der spektralen Sensitivität $Sens_{i(l)}(\lambda)$ des dem Kanal l zugeordneten Detektors $i(l)$ und dem Beleuchtungsspektrum $Ill_l(\lambda')$ des Kanals l. Das Beleuchtungsspektrum kann nun per Superposition aus K Lichtquellen mit einzelnen Helligkeitswerten zusammengesetzt sein, die alle eigene Spektren $IllLED_k(\lambda')$ besitzen und im Kanal l mit einem Wert $P_{kl}$ angesteuert werden. Dann ist das integrale Beleuchtungsspektrum

$$Ill_l(\lambda') = \sum_{k=0}^{K-1} IllLED_k(\lambda') \cdot P_{kl} \qquad (3)$$

und es lässt sich eine sequentielle Mixing-Matrix

$$\mathcal{M}_{i(l)jk} = \int Em_j(\lambda) \cdot Sens_{i(l)}(\lambda) d\lambda \cdot \int Exc_j(\lambda') \cdot IllLED_k(\lambda') d\lambda' \qquad (4)$$

berechnen, so dass die Intensität des Pixels dann

$$I_l = \tau \sum_{j=0}^{J-1} \sum_{k=0}^{K-1} \mathcal{M}_{i(l)jk} \cdot c_j \cdot P_{kl} \qquad (5)$$

ist.

Es soll eine simultane Detektion die Beleuchtung realisiert sein, das heißt man beschränkt sich auf simultan auslesbare Kanäle. Deren Zahl ist aber durch die Anzahl der Detektoren gegeben, da ein Detektor gleichzeitig nur alle ihn erreichenden Kanäle auslesen kann, weshalb man die Kanäle l mit den Detektoren i identifizieren kann und somit die Notation abkürzen kann als $I_l \equiv I_i$ und $\mathcal{M}_{i(l)jk} \equiv \mathcal{M}_{ijk}$. Weil hier nur eine gleichzeitige Beleuchtung betrachtet werden soll (sequentielle Beleuchtung ist immer auch möglich und umfasst, auch können so natürlich auch nicht gleichzeitig auslesbare Kombinationen von Kanälen l betrachtet werden - die Anpassung des Modells ist einfach, würde aber die Verständlichkeit der Notation hier komplizieren), kann der Index l bei den $P_{kl}$ weggelassen werden, und $P_k \equiv P_{kl}$ gesetzt werden. $\mathcal{M}_{ijk}$ kann berechnet werden. Damit wird Gleichung (5) zu

$$I_i = \tau \sum_{j=0}^{J-1} \sum_{k=0}^{K-1} \mathcal{M}_{ijk} \cdot c_j \cdot P_k \qquad (6)$$

Die integral detektierte Intensität pro Fluorophor (über alle Detektoren hinweg) ist dann

$$I_j = c_j \cdot \tau \sum_{i=0}^{I-1} \sum_{k=0}^{K-1} \mathcal{M}_{ijk} \cdot P_k. \qquad (7)$$

Gemäß Gleichung (7) sind folglich die Beleuchtungshelligkeiten $p_k$ so zu wählen, dass die pro Fluorophor gemessenen Bildintensitäten $I_j$ einem Vorgabewert $I_j^{Soll}$ entsprechen, der den gewünschten Photoelektronen pro Pixel entspricht, die aufgrund des gewünschten Signal-zu-Rauschverhältnisses vorgegeben sind. Wie ersichtlich, wird in Gleichung (7) über die Anzahl der k-Lichtquellen als auch über die Anzahl der i-Detektoren integriert, so dass in diesem Beispiel sowohl das Übersprechen der Detektoren als auch die Kreuzanregung der Fluorophore berücksichtigt werden. Prinzipiell ist auch die Berücksichtigung nur eines der beiden Effekte möglich; in diesem Falle wäre entweder nur über die Anzahl der k-Lichtquellen oder nur über die Anzahl der i-Detektoren zu integrieren.

Gemäß dem erfinderischen Konzept kann die optimale Wahl der Beleuchtungshelligkeiten für alle Lichtquellen gemeinsam und insbesondere bei einem simultanen Auslesen der vorhandenen Detektoren erfolgen. Das erfindungsgemäße Konzept lässt sich daneben aber auch bei sequentieller Einstellung der verschiedenen Lichtquellen und/oder bei sequentiellem Auslesen der verschiedenen Detektoren implementieren, wobei dann die ermittelten Werte der Beleuchtungshelligkeiten einfach der Reihe nach an die Lichtquellen angelegt werden. Auch eine Mischform für die sequentielle Beleuchtung mit verschiedenen Superpositionen von Beleuchtungshelligkeiten ist möglich.

Bei einer vorteilhaften Optimierungsmethode wird zur Ermittlung der Beleuchtungshelligkeiten der mindestens zwei Lichtquellen zunächst jeweils ein Initialwert der Beleuchtungshelligkeit für jede der Lichtquellen vorgegeben und die zugehörigen Bildintensitäten pro Fluorophor werden gemessen und das jeweils zugehörige Signal-zu-Rauschverhältnis wird berechnet, wobei anschließend in einem Iterationsverfahren sukzessive die Werte der Beleuchtungshelligkeiten solange verändert werden, bis der jeweils vorgegebene Sollwert des Signal-zu-Rauschverhältnisses pro Fluorophor erreicht ist. Ein Verändern der Beleuchtungshelligkeiten in diesem Iterationsverfahren umfasst ein Erhöhen oder auch ein Erniedrigen der Beleuchtungshelligkeiten. Es sei angemerkt, dass bei dieser Optimierungsmethode ein Initialwert der Helligkeit auch 0 sein kann oder aber durch eine Veränderung auf 0 gesetzt werden kann.

In einer vorteilhaften Ausgestaltung wird bei der Ermittlung der Beleuchtungshelligkeiten der mindestens zwei Lichtquellen eine Bildverstärkung der mindestens zwei Detektoren berücksichtigt. Hierzu wird eine vorgegebene Bildverstärkung eines Detektors bei der Ermittlung der Beleuchtungshelligkeiten zugrunde gelegt oder umgekehrt bei der Ermittlung der Beleuchtungshelligkeiten passende Bildverstärkungen der Detektoren ausgegeben bzw. eingestellt. Gleiches gilt analog für die Belichtungszeiten der jeweiligen Detektoren. Diese können insbesondere fest vorgegeben und konstant gehalten werden. Der oben erwähnte Parameter "Geschwindigkeit" der Bildgebung entspräche dann einem fest vorgegebenen Wert. Der Wert der Belichtungszeit kann wiederum in Abhängigkeit von der Bildverstärkung eines Detektors bestimmt werden. Umgekehrt kann auch die Bildverstärkung eines Detektors in Abhängigkeit von einer vorgegebenen Belichtungszeit bestimmt werden. Generell gilt, dass bei hoher Belichtungszeit die Bildverstärkung niedriger gewählt werden kann und umgekehrt bei hoher Bildverstärkung die Belichtungszeit niedriger gewählt werden kann. Allgemein bestimmen beide Einstellungen den Parameter der "Geschwindigkeit" der Bildgebung. Insbesondere kann die Wahl der Bildverstärkung vom Dynamikbereich einer Analog-Digital-Wandlung des Detektors und der aufgrund der Signal-zu-Rauschvorgabe zu erwartenden Photoelektronen abhängig gemacht werden.

Ein möglicher dritter Parameter der Bildgebung nach dem erfindungsgemäßen Konzept ist, wie oben bereits erläutert, die "Probenbelastung". Da die Bildgebung in der Regel an lebenden Proben erfolgt, ist darauf zu achten, dass keine thermischen oder photochemischen Schäden aufgrund zu hoher Strahlungsintensität auftreten. Ein Maß für die Probenbelastung von mit Fluorophoren eingefärbten Proben ist das Bleichen der Farbstoffe.

Gemäß einem weiteren Aspekt, insbesondere auch als Ausgestaltung des oben beschriebenen erfindungsgemäßen Konzepts, aber auch unabhängig von diesem, ist vorgesehen, dass während der Ermittlung der Beleuchtungshelligkeiten der mindestens zwei Lichtquellen ein Bleichkoeffizient pro Fluorophor bestimmt wird. Es sei darauf hingewiesen, dass dieser Aspekt unabhängig von dem erstgenannten Aspekt der Berücksichtigung von "Cross-Excitation" und "Cross-Emission" sein kann, und dass es sich somit um einen selbständig zu schützenden Aspekt handelt. Im Rahmen dieser Offenbarung betrifft dieser zweite Aspekt demnach ein Verfahren zum automatischen Ermitteln von einzustellenden Beleuchtungshelligkeiten von mindestens zwei Lichtquellen zur Anregung jeweils mindestens eines Fluorophors in einer in einem Fluoreszenzmikroskop abzubildenden Probe, wobei jede der mindestens zwei Lichtquellen einzeln bezüglich ihrer Beleuchtungshelligkeit ansteuerbar ist, und wobei mindestens zwei Detektoren jeweils eine Bildintensität der mikroskopisch abgebildeten Probe detektieren, wobei die einzustellenden Beleuchtungshelligkeiten der mindestens zwei Lichtquellen automatisch derart ermittelt werden, dass ein vorgegebener Sollwert eines Signal-zu-Rauschverhältnisses pro Fluorophor erreicht wird, wobei während der Ermittlung der Beleuchtungshelligkeiten der mindestens zwei Lichtquellen ein Bleichkoeffizient pro Fluorophor bestimmt wird. Insbesondere kann bei einem Iterationsverfahren zur Optimierung der Einstellwerte der Beleuchtungshelligkeiten (mit oder ohne Berücksichtigung von Cross-Excitation und Cross-Emission) ein Bleichkoeffizient pro Fluorophor (zumindest näherungsweise) mathematisch bestimmt werden. Aus dem derart bestimmten Bleichkoeffizient lässt sich eine Bleichkinetik für die jeweilige Fluorophor-Konzentration $c_j$ angeben. Ein "maximaler Bleichwert" ist erreicht, wenn diese Konzentration auf einen vorbestimmten Minimalwert abgefallen ist. Bei bekannter Bleichkinetik ist diesem Minimalwert eine bestimmte Zeitdauer bis zum Erreichen des maximalen Bleichwertes zugeordnet. Eine mögliche Bleichkinetik geht z.B. von einem zeitlich exponentiellen Abfall der FluorophorKonzentration aus. Der maximale Bleichwert kann dann aus dem Bleichkoeffizient, den ermittelten Beleuchtungshelligkeiten und der detektierten Intensität pro Fluorophor berechnet werden.

Aufgrund der genannten Zusammenhänge lässt sich anhand des ermittelten maximalen Bleichwertes bzw. der hierzu korrespondierenden Zeitdauer ein Abbruchkriterium für die Abbildung der Probe in Bezug auf das entsprechende Fluorophor aufstellen. Ein solches Abbruchkriterium kann beispielsweise vorsehen, bei Erreichen des maximalen Bleichwertes bzw. der zugeordneten Zeitdauer oder aber entsprechend vorher bzw. früher die Beleuchtungshelligkeiten der entsprechenden Lichtquellen abzusenken, wobei optional die Bildverstärkung des entsprechenden Detektors erhöht werden kann. Für ein betrachtetes Fluorophor wird es in der Regel ausreichend sein, die direkt zugeordnete Anregungslichtquelle zu reduzieren, wobei zum Ausgleich der Reduktion der Bildhelligkeit die Bildverstärkung und/oder die Belichtungszeit des entsprechenden direkt zugeordneten Detektors erhöht werden kann. In der Praxis bleichen jedoch insbesondere besonders kurzwellige Anregungslichtquellen auch andere Fluorophore, deren Anregung weiter im roten Spektralbereich liegt ("Stokes Shift"). In solchen Fällen kann auch eine Absenkung der Beleuchtungshelligkeiten solcher Lichtquellen vorteilhaft sein. Bei Berücksichtigung von Cross-Excitation liegt eine Wirkungsmatrix der Intensitäten der einzelnen Lichtquellen auf die Anregung der einzelnen Fluorophore vor, und eine Wirkungsmatrix auf deren Bleichkoeffizienten kann separat oder im Verlauf der Einstellung des Signal-zu-Rauschverhältnisses experimentell bestimmt werden, so dass man hier sehr gezielt vorgehen kann.

Mit den derart neu eingestellten Beleuchtungshelligkeiten kann wiederum das Signal-zu-Rauschverhältnis pro Fluorophor sowie ein neuer maximaler Bleichwert errechnet werden. Das Abbruchkriterium kann weiterhin vorsehen, dass bei Erreichen eines weiteren maximalen Bleichwertes die entsprechende Anregungslichtquelle bzw. die entsprechenden relevanten Lichtquellen in ihrer Beleuchtungshelligkeit auf 0 reduziert werden, um eine Schädigung der Probe zu verhindern.

Bei dem vorliegenden erfindungsgemäßen Konzept ist es zweckmäßig, wenn die detektierte Bildintensität nicht beeinflussende Fluorophore und/oder diese nicht beeinflussende Lichtquellen während der Ermittlung der Beleuchtungshelligkeiten bestimmt werden. Dies kann beispielsweise der Fall sein, wenn ein bestimmtes Fluorophor trotz gegenteiliger Angabe des Benutzers und/oder des Systems in einer Probe oder dem ausgewählten Sehfeld nicht vorhanden ist bzw. wenn aus diesem oder einem anderen Grund eine vorgesehene Lichtquelle keine Wirkung auf die detektierte Bildintensität hat.

Weiterhin ist es besonders vorteilhaft, wenn zur Ermittlung der Beleuchtungshelligkeiten der mindestens zwei Lichtquellen in Folge eines Objektivwechsels in dem Fluoreszenzmikroskop eine Änderung der detektierten Bildintensitäten aufgrund dieses Objektivwechsels berücksichtigt wird, indem die Abbildungsverhältnisse in die Probe berücksichtigt werden, was den geometrischen Fluss des Beleuchtungslichts und den vom System auf ein Detektorelement abgebildeten geometrischen Fluss des Fluoreszenzlichts betrifft. Insbesondere betrifft das die systemabhängige Ausleuchtung der Beleuchtungspupille, die Vergrößerung der Leuchtfeldblende, den Detektionskegel des Objektivs und die in die Probe abgebildete Größe eines Detektorelements.

Im Folgenden soll eine mögliche Optimierungsmethode zur optimalen Ermittlung der Beleuchtungshelligkeiten der mindestens zwei Lichtquellen mathematisch kurz beschrieben werden.

Die Optimierung erfolgt beispielsweise mittels eines Iterationsverfahrens nach der Newton-Raphson-Methode:

1. Messe für eine initiale Beleuchtungseinstellung $P_k^{(0)}$ die Intensitäten $I_i^{(0)}$. Dies ist eine Bildaufnahme mit einem (guten) Startwert für die Beleuchtung. Berechne die $\mathcal{M}_{ijk}$ aus den Gerätespektren und den Fluorophordaten. Im einfachsten Fall sind die Gerätespektren aus dem Designprozess oder aus Kalibrationsmessungen bekannt, ebenso wie die Fluorophordaten durch Kalibrationsdaten bekannt und beispielsweise in einer Datenbank verfügbar sind. Eine Ermittlung bzw. Verbesserung der Matrix-Einträge im Verlauf des Iterationsverfahrens ("on the fly"), wie in Quasi-Newton-Verfahren (wie BFGS) üblich, ist jedoch auch möglich. Generiere die Zielwerte $I_j^{(\infty)}$ beispielsweise aus der Reuleaux-Control, wie unten erläutert, und evtl. farbstoffspezifischen Daten.

2. Schätze die $c_j^{(n)}$ mit einer geeigneten Methode ab. Dies kann aus der Fachliteratur im Prinzip bekanntes lineares Unmixing oder auch Phasor-Unmixing sein.

3. Berechne die integrale Intensität pro Fluorophor.

4. Schätze den Bleichkoeffizient pro Farbstoff ab.

5. Berechne die Jacobi-Matrix der integralen Intensität pro Fluorophor bzgl. der Beleuchtungseinstellung durch Differentiation von Gleichung (7) als

$$\frac{\partial I_j^{(n)}}{\partial P_k} = \tau \cdot c_j^{(n)} \cdot \sum_{i=0}^{I-1} \mathcal{M}_{ijk} \tag{8}$$

6. Untersuche die Jacobi-Matrix, um unwirksame Lichtquellen und Abwesenheit von Fluorophoren festzustellen. Wenn eine Zeile leer ist, dann bedeutet das, dass das entsprechende Fluorophor nicht im Bild ist. Wenn eine Spalte leer ist, dann hat die entsprechende Lichtquelle keinen Einfluss auf die Anzahl der detektierten Photoelektronen.

7. Berechne die neue Beleuchtungseinstellung als Newton-Schritt

$$P_k^{(n+1)} = P_k^{(n)} + \sum_{j=0}^{J-1} \left( \frac{\partial I_j^{(n)}}{\partial P_k} \right)_{jk}^{-1} \cdot \left( I_j^{(\infty)} - I_j^{(n)} \right) \tag{9}$$

Dabei kann es sich bei der Matrixinversion um eine Moore-Penrose-Pseudoinverse handeln.

8. Beschränke die $P_k^{(n+1)}$ auf positive Werte innerhalb des Ansteuerungsbereichs. Falls $P_k^{(n+1)}$ < 0 ist, enferne die Lichtquelle *k* aus der Lösung und setze $P_k^{(n+1)} = 0$.

9. Prüfe Abbruchkriterien

(a) $I_j^{(\infty)} - I_j^{(n)}$ kleiner als Toleranz. Einstellung erfolgreich.

(b) $P_k^{(n+1)} - P_k^{(n)}$ kleiner als Toleranz. Einstellung erfolgreich.

(c) Jacobi-Matrix nicht invertierbar. Fehlermeldung, Ursache klären. Durch die Entfernung leerer Zeilen und Spalten in Schritt 6 sind viele Ursachen für eine Nicht-Invertierbarkeit schon abgefangen. Zur Klärung der Ursache kann dem Benutzer eine Fehlermeldung angezeigt werden.

(d) Bleichen zu stark.

(e) maximale Anzahl von Iterationen erreicht.

10. Neue Bildaufnahme $I_i^{(n+1)}$ und zurück zu Schritt 2.

Das erfindungsgemäße Konzept betrifft weiterhin eine Recheneinheit, die dazu eingerichtet ist, ein Verfahren gemäß den oben erläuterten Ausführungsformen des erfinderischen Konzepts auszuführen. Das Verfahren kann bei dieser Ausführungsform voll automatisch auf der Recheneinheit ausgeführt werden. Somit können die entsprechenden Mikroskopparameter in höchstem Maße benutzerfreundlich ermittelt werden. Die ermittelten Werte können angezeigt und/oder gleich an den entsprechenden Elementen des Fluoreszenzmikroskops eingestellt werden.

Das erfindungsgemäße Konzept betrifft in einer weiteren Ausführungsform ein Computerprogramm mit Programmcode zur Ausführung eines Verfahrens gemäß dem oben geschilderten erfindungsgemäßen Konzept, wenn das Computerprogramm auf einem Prozessor, insbesondere auf der genannten Recheneinheit ausgeführt wird.

Schließlich betrifft das erfindungsgemäße Konzept ein Fluoreszenzmikroskop mit mindestens zwei Lichtquellen zur Anregung jeweils mindestens eines Fluorophors in einer mittels des Fluoreszenzmikroskops abzubildenden Probe, wobei jede der mindestens zwei Lichtquellen einzeln bezüglich ihrer Beleuchtungshelligkeit ansteuerbar ist, weiterhin mit mindestens zwei Detektoren zur Detektion jeweils einer Bildintensität der mikroskopisch abgebildeten Probe und mit einer Recheneinheit, die dazu eingerichtet ist, das oben erläuterte Verfahren gemäß erfinderischem Konzept auszuführen, um automatisch die einzustellenden Beleuchtungshelligkeiten der mindestens zwei Lichtquellen zu ermitteln.

Wenn das Signal-zu-Rauschverhältnis pro Fluorophor in Abhängigkeit von detektierten Bildintensitäten pro Fluorophor ermittelt wird, ist es zweckmäßig, wenn die Recheneinheit mit den Detektoren des Fluoreszenzmikroskops in Kommunikationsverbindung steht.

Weiterhin ist es zweckmäßig, wenn die Recheneinheit mit Mitteln zum automatischen Einstellen der Beleuchtungshelligkeiten der mindestens zwei Lichtquellen in Kommunikationsverbindung steht, um die Beleuchtungshelligkei-

**EP 4 176 298 B1**

ten derart einzustellen, dass ein vorgegebener Sollwert eines Signal-zu-Rauschverhältnisses pro Fluorophor erreicht wird, wobei zur Ermittlung der Beleuchtungshelligkeiten der mindestens zwei Lichtquellen ein Übersprechen eines Detektors für unterschiedliche Emissionsspektren der Fluorophore und/oder eine Kreuzanregung eines Fluorophors für unterschiedliche Beleuchtungsspektren der Lichtquellen berücksichtigt wird.

Im Übrigen gelten die Ausführungen zu dem erfindungsgemäßen Verfahren in analoger Weise für das erfindungsgemäße Fluoreszenzmikroskop sowie für seine Ausgestaltungen und die sich daraus ergebenden Vorteile.

Eine Möglichkeit der Eingabe der drei genannten Parameter "Geschwindigkeit", "Bildqualität" und "Probenschonung" bietet das schon erwähnte, sogenannte Reuleaux-Element. Hier handelt es sich allgemein um eine Eingabefläche in Form eines Vielecks, wobei die Koordinatenursprünge Eckpunkte oder Kantenmittelpunkte zwischen jeweils zwei benachbarten Eckpunkten sein können. Bevorzugt ist ein Bogenvieleck, d.h. ein Vieleck, bei dem die Kanten nicht Geraden, sondern Kreisbögen um einen gegenüberliegenden Eckpunkt sind. Bei den hier betrachteten drei Parametern ist - ohne Beschränkung der Allgemeinheit - dieses Element insbesondere als Bogen-Dreieck oder Reuleaux-Dreieck ausgeführt. Beim Reuleaux-Dreieck ist der Abstand jedes Punktes einer Kante vom gegenüberliegenden Eckpunkt konstant.

Die Wahl qualitativer Parameter, wie "Geschwindigkeit", "Bildqualität" und "Probenschonung", erlaubt eine intuitive Einstellung, ohne dass der Benutzer die technischen Hintergründe wissen oder verstehen muss. Das Reuleaux-Dreieck bildet drei Wünsche in zwei Dimensionen ab und verdeutlicht dabei, dass diese Wünsche nicht gleichzeitig erfüllbar sind. Gemäß vorliegendem Konzept wird nun die "Bildqualität" im Sinne eines Signal-zu-Rauschverhältnisses quantifiziert und die "Geschwindigkeit" durch die verwendete Belichtungszeit (und/oder die Verstärkung) gegeben. Die Anzahl der detektierten Photonen hängt stark von der Probe und den verwendeten Fluorophoren und der Markierungsdichte ab, so dass diese Observable optimiert wird, um den gewünschten Wert zu erreichen. Die Belichtungszeit wird dabei vorzugsweise festgehalten und die Beleuchtung angepasst. Die Größe "Probenschonung" bzw. "probenschonende Abbildung" wird als Abbruchkriterium berücksichtigt, um eine gewisse Probenbelastung nicht zu überschreiten.

Die Vorgabe des Signal-zu-Rauschverhältnisses kann direkt durch den Benutzer erfolgen. Es ist aber auch möglich, dass der Benutzer das Signal-zu-Rauschverhältnis in einem vorgegebenen Bereich definiert. Dieser vorgegebene Bereich kann zum Beispiel aus a-priori-Information erzeugt oder parameterisiert werden, wie eine Berücksichtigung einer anderweitig bekannten Bleichempfindlichkeit des Fluorophors, der vorgegebenen Belichtungszeit oder anderer Kriterien. Im Allgemeinen wird die Vorgabe des Signal-zu-Rauschverhältnisses immer einen Kompromiss mit der Belichtungszeit und dem Bleichverhalten beinhalten, in dessen Rahmen ersteres maximiert werden soll.

Somit hat der Benutzer bei vorgegebener "Geschwindigkeit", hier also bspw. Belichtungszeit, eine gewisse Auswahl an "Bildqualität", wobei gleichzeitig die Probenbelastung, die sich dynamisch während der Beleuchtung der Probe verändert, unterhalb eines Grenzwertes bleiben muss. Zusätzlich kann das System beim Vorhandensein besonders bleichempfindlicher Fluorophore von sich aus den Ziel-SNR-Wert reduzieren und/oder andere Anpassungen vornehmen. Weitere Ausführungen zum Reuleaux-Dreieck, das vorteilhaft als GUI ("graphical user interface") zur Bedienung des Fluoreszenzmikroskops implementiert ist, sind dem entsprechenden Ausführungsbeispiel zu entnehmen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

Figurenbeschreibung

Figur 1 zeigt schematisch ein Fluoreszenzmikroskop gemäß einer erfindungsgemäßen Ausführungsform,

Figur 2 zeigt eine Möglichkeit der Parametereinstellung mittels einer Reuleaux-Control und

Figur 3 zeigt eine Ausführungsform eines Verfahrensablaufs des erfindungsgemäßen Verfahrens.

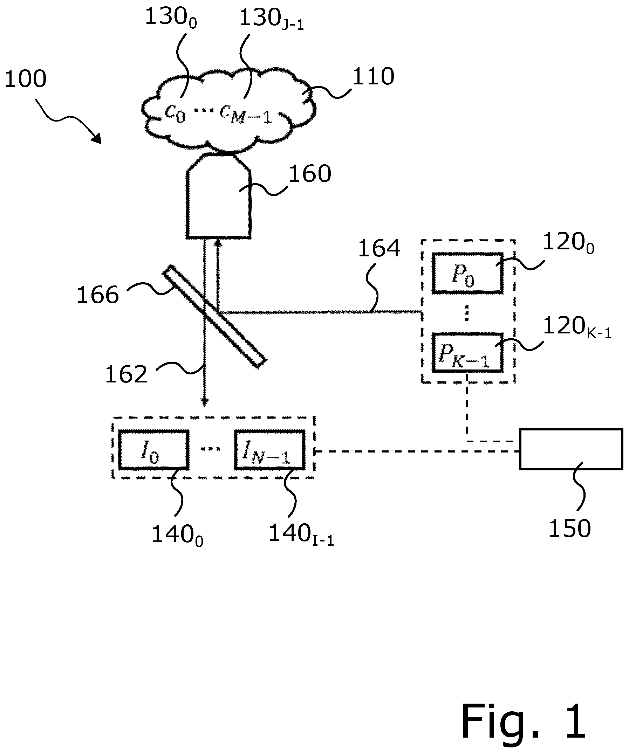

Figur 1 zeigt sehr schematisch ein Fluoreszenzmikroskop 100 mit K Lichtquellen $120_k$, k = 0,..., K -1 zur Emission von K verschiedenen Anregungswellenlängen. Vorteilhafterweise handelt es sich bei diesen Lichtquellen um LEDs oder Laser mit einem entsprechenden Spektrum, wobei bei Bedarf Filter nachgeschaltet sein können. Prinzipiell kann auch eine breitbandige Lichtquelle verwendet werden, aus deren Spektrum mittels eines Filterrades oder Filterschiebers sequentiell die gewünschten Anregungswellenlängen ausgefiltert werden können. Einer der großen Vorteile des erfindungsgemäßen Konzepts ist jedoch, dass bei Vorhandensein mehrerer Lichtquellen diese simultan in ihren Beleuchtungshelligkeiten eingestellt werden können, so dass ein sequentieller Betrieb bzw. eine sequentielle Einstellung nicht erforderlich ist.

Wie in Figur 1 dargestellt, geben die einzelnen Lichtquellen $120_k$ einen Beleuchtungsstrahlengang 164 ab, der über ein spektrales Teilerelement 166 in das Objektiv 160 des Mikroskops 100 geleitet wird. Bei diesem spektralen Teilerelement 166 handelt es sich um ein dichroitisches Element, das die betreffende Anregungswellenlänge ablenkt und für die entsprechende Fluoreszenzstrahlung transparent ist. Die Einzelheiten der Optik eines Fluoreszenzmikroskops sind in Figur 1 nur sehr schematisch dargestellt, da sie im Einzelnen aus dem Stand der Technik ausreichend bekannt sind. Der Beleuchtungsstrahlengang 164 wird über das Objektiv 160 auf die Probe 110 gelenkt und regt darin befindliche Fluorophore $130_j$, j = 0,..., J-1 zur Emission von Fluoreszenzstrahlung an. Die abgegebene Fluoreszenzstrahlung wird über das Objektiv 160 und etwaigen weiteren optischen Abbildungselementen auf entsprechende Detektoren $140_i$, i = 0,..., I-1 abgebildet. Jeder Lichtquelle $120_k$, die im anmeldungsgemäßen Sinne eine Anregungswellenlänge emittiert, ist ein entsprechendes Fluorophor $130_j$ zugeordnet, das seinerseits Fluoreszenzstrahlung emittiert, die wiederum von einem entsprechenden Detektor $140_i$ detektiert wird. Somit sind den J unterscheidbaren Fluorophoren jeweils I Detektoren zugeordnet.

Bei den Detektoren kann es sich - analog wie bei den Lichtquellen - um mehrere Einzeldetektoren handeln, denen Filter vorgeschaltet sein können, insbesondere da das vorliegende erfinderische Konzept ein simultanes Auslesen der I Detektoren erlaubt. Prinzipiell ist es aber auch möglich, einen oder mehrere breitbandige Detektoren mit entsprechenden Filterrädern oder Filterschiebern zu betreiben und somit ganz oder teilweise die Detektoren sequentiell zu betreiben. Der auf die Detektoren fallende Detektionsstrahlengang ist mit 162 bezeichnet.

In Figur 1 ist beispielhaft ein Epifluoreszenzmikrokop dargestellt, es versteht sich jedoch, dass sich das erfinderische Konzept auch auf anderen Fluoreszenzmikroskopsystemen wie Lichtblattmikroskopen, Konfokalmikroskopen, Multiphotonenmikroskopen etc. implementieren lässt.

Die Beleuchtungshelligkeit $P_k$ ("illumination power") und somit die abgestrahlte Leistung einer jeden Lichtquelle $120_k$ ist für jede Lichtquelle $120_k$ einzeln einstellbar. Insbesondere ermöglicht das erfindungsgemäße Konzept die simultane Einstellung der Beleuchtungshelligkeiten $P_k$ für alle K Lichtquellen. In dem hier betrachteten Ausführungsbeispiel ist hierzu eine Recheneinheit 150 vorgesehen, die mit den Mitteln zum Einstellen der Beleuchtungshelligkeiten $P_k$ der Lichtquellen in Kommunikations- bzw. Wirkverbindung steht. Die Detektoren $140_i$ detektieren die Verteilung des jeweiligen Fluorophors im aufgenommenen Bild der Probe 110 und somit jeweils eine Bildintensität $I_i$. Die Recheneinheit 150 steht mit den Detektoren $140_i$ in Kommunikations- bzw. Wirkverbindung, um Signale entsprechend den einzelnen Bildintensitäten aufnehmen zu können. Ein simultanes Auslesen der I Detektoren ist gemäß erfindungsgemäßem Konzept möglich.

Die einzustellenden Beleuchtungshelligkeiten $P_k$ werden nun automatisch von der Recheneinheit 150 derart ermittelt, dass ein vorgegebener Sollwert eines Signal-zu-Rauschverhältnisses für jedes unterscheidbare Fluorophor eingestellt wird,

wobei hierzu ein Übersprechen eines Detektors aufgrund anderer, diesem nicht unmittelbar zugeordneter Emissionsspektren von Fluorophoren sowie eine Kreuzanregung eines Fluorophors durch andere, diesem nicht unmittelbar zugeordnete Beleuchtungsspektren der Lichtquellen berücksichtigt wird. Ein Maß für das Signal-zu-Rauschverhältnis pro Fluorophor ist hierbei die Quadratwurzel aus der integral detektierten Intensität pro Fluorophor über alle Detektoren hinweg gemäß Gleichung (7).

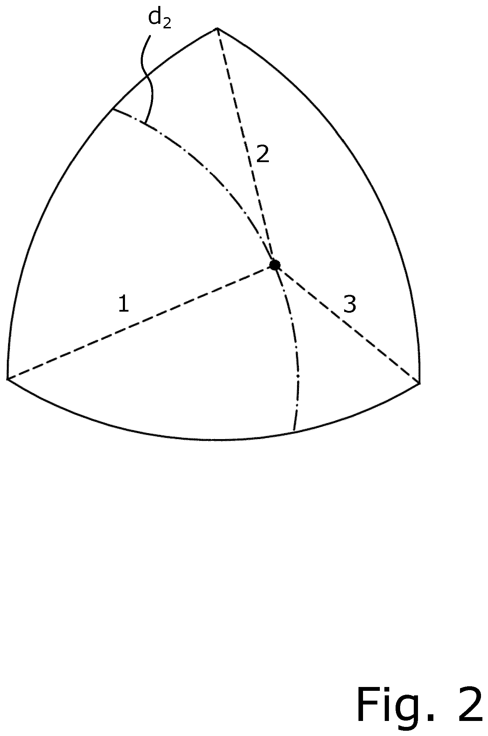

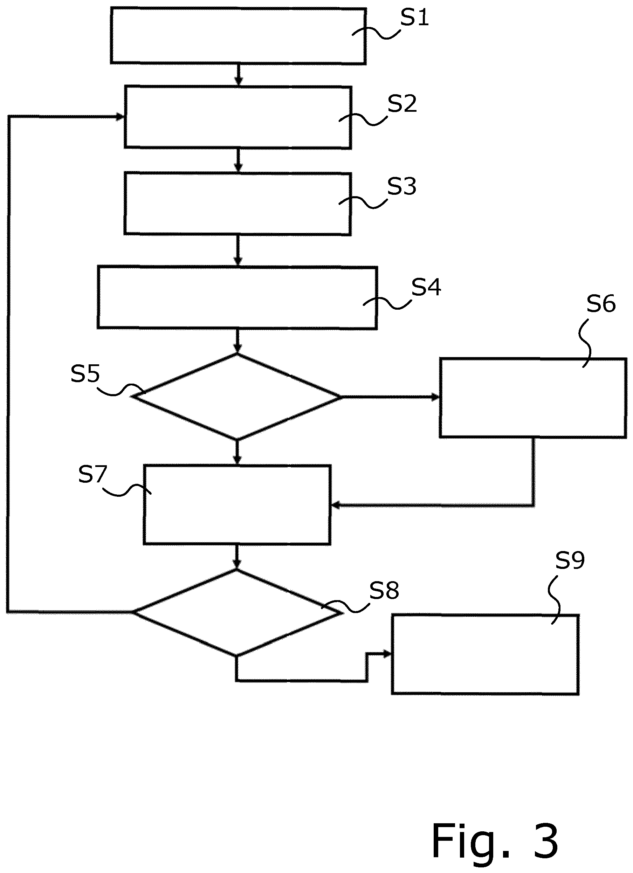

Die Vorgabe eines Vorgabewerts $I_j^{Soll}$ des Signal-zu-Rauschverhältnisses pro Fluorophor erfolgt in diesem Ausführungsbeispiel über ein Reuleaux-Dreieck, wie in Figur 2 dargestellt. Das in Figur 2 dargestellte Reuleaux-Dreieck wird vorteilhafterweise einem Benutzer des Fluoreszenzmikroskops 100 als GUI ("Graphical User Interface") zur Bedienung des Mikroskops dargestellt. An den Eckpunkten des bogenförmigen Dreiecks liegen die Koordinatenursprünge der drei Parameter, "Geschwindigkeit", "Bildqualität" und "Probenschonung". Die Werte dieser Parameter sind in Figur 3 mit 1, 2 bzw. 3 bezeichnet und liegen auf einem Kreisbogen mit gleichem Abstand vom jeweiligen Koordinatenursprung. In dem gezeigten Beispiel ist der Parameter "Geschwindigkeit" durch einen vorgegebenen Wert 1 der Belichtungszeit $\tau$ ("exposure time") und/oder einen vorbestimmten Wert für die Verstärkung ("gain") fest vorgegeben. Der Parameter "Probenschonung" ist hier mit einem Mindestwert 3 eingezeichnet, der angibt, dass der zugeordnete Bleichwert immer kleiner gleich einem maximalen Bleichwert sein muss. Mit anderen Worten darf der zugeordnete Wert des Parameters "Probenschonung" den Wert 3 nicht unterschreiten. Somit bleiben für den Wert des Parameters "Bildqualität" nur die Werte übrig, die auf dem oberen Kreisbogenabschnitt $d_2$ liegen. Der Wert 2 ist hierbei der maximal mögliche. Es sei darauf hingewiesen, dass der Wert 3 des Parameters "Probenschonung" sich dynamisch im Verlauf der Bildgebung in einer Weise ändern kann, dass der Bereich $d_2$ abnimmt.

Das als GUI ausgebildete Reuleaux-Dreieck erlaubt somit einem Benutzer eine intuitive Eingabe eines gewünschten Sollwertes der Bildqualität, wobei aus dem eingegebenen Wert 2, der im Bereich $d_2$ liegt (in Figur 2 ist der maximale Wert 2 dargestellt), ein Sollwert für das Signal-zu-Rauschverhältnis abgeleitet wird. Sollten dem System besonders bleichempfindliche Fluorophore in der Probe 110 bekannt sein, kann das System von sich aus niedrigere Werte 2 für die Bildqualität wählen. Das System mithin die Recheneinheit 150 ermittelt aus dem vorgegebenen Wert 2 einen entsprechenden Wert der integral detektieren Intensität pro Fluorophor $I_j$, der als Sollwert für die zu ermittelnden Beleuchtungshelligkeiten $P_k$ dient.

Anschließend wird beispielsweise über das bereits oben erläuterte Iterationsverfahren beginnend mit einer initialen Beleuchtungseinstellung über n Schritte eine optimale Beleuchtungseinstellung der K Lichtquellen ermittelt. Bei jedem Schritt werden auch die Bildintensitäten $I_j$ pro Fluorophor (integriert über die Detektoren) ermittelt bzw. gemessen. Die oben erläuterten Iterationsschritte 2 bis 8 werden solange durchlaufen bis eines der in Punkt 9 genannten Abbruchkriterien erfüllt ist. Hierzu gehören: Die gemessene Bildintensität pro Fluorophor unterscheidet sich von dem vorgegebenen Sollwert um weniger als ein Toleranzwert. Weiterhin: Der Unterschied der neu einzustellenden Beleuchtungshelligkeit einer Lichtquelle zu der im vorherigen Schritt eingestellten Beleuchtungshelligkeit ist kleiner als ein Toleranzwert. Weiterhin: Die in Gleichung (8) angegebene Jacobi-Matrix ist nicht invertierbar. Dies führt zu einer Fehlermeldung und vorteilhafterweise zur Ausgabe möglicher Fehlerursachen an den Benutzer. Weiterhin: Eine im Voraus bestimmte Anzahl von Iterationen wurde erreicht. Schließlich: Das Bleichen der Probe ist zu stark; mit anderen Worten kann bei dynamischer Entwicklung des Wertes 3 des Parameters "Probenschonung" der Wertebereich $d_2$ schrumpfen, so dass die Beleuchtungshelligkeiten reduziert werden müssen, um eine Schädigung der Probe auszuschließen. In diesem Fall kann ein weiteres Abbruchkriterium herangezogen werden, bei dem die entsprechende Beleuchtungshelligkeit bzw. die Beleuchtungshelligkeiten der relevanten Lichtquellen reduziert und vorteilhafterweise parallel die Verstärkungen der beteiligten Detektoren oder zumindest die Verstärkung des unmittelbar das betreffende Fluorophor detektierenden Detektors erhöht wird.

Figur 3 erläutert eine Ausführungsform des erfindungsgemäßen Konzepts zur Optimierung der Beleuchtungshelligkeiten in Form eines Flussdiagramms.

Figur 3 gibt eine Überblick über eine Ausführungsform des erfinderischen Konzepts zur Einstellung von Beleuchtungshelligkeiten von K vorhandenen Lichtquellen $120_k$ in einem Fluoreszenzmikroskop 100 zur Untersuchung einer Probe 110 mit J unterscheidbaren Fluorophoren $130_j$, wobei jedes Fluorophor von einem der I Detektoren 140; in Form eines Bildes der Probe detektiert wird. Hierzu sei auf die obigen Ausführungen in Zusammenhang mit den Figuren 1 und 2 verwiesen. Im Schritt S1 werden insbesondere der Recheneinheit 150 (vergleiche Figur 1) teils vom System teils vom Benutzer folgende Vorgaben gemacht: Es werden Initialwerte für die Beleuchtungshelligkeiten, beispielsweise aufgrund Herstellervorgaben oder eines lernenden Algorithmus, vorgegeben. Die Kopplungsmatrix M wird aus den Spektren der Lichtquellen, den Detektionsspektren der Detektoren und den Fluorophordaten berechnet. Die Zielwerte der Bildintensitäten $I_j$ pro Fluorophor integriert über die Detektoren werden beispielsweise aus der genannten Reuleaux-Eingabe (vergleiche Figur 2) und/oder durch entsprechende Systemvorgaben (farbstoffspezifische Daten) generiert. Weiterhin werden die oben genannten Abbruchkriterien definiert.

Nach dem Initialisierungsschritt S1 beginnt das System mit der Bildaufnahme von einzelnen Detektorbildern, die jeweils eine Bildintensität $I_i$ der mikroskopisch abgebildeten Probe 110 für jedes Fluorophor detektieren.

Im Schritt S3 werden die Konzentrationen $c_j$ der jeweiligen Fluorophore $130_j$ in der Probe 110 abgeschätzt und die integralen Helligkeiten $I_j$ gemäß Gleichung (7) berechnet. Diese ergibt sich aus den Fluorophorkonzentrationen $c_j$, der eingestellten Belichtungszeit $\tau$, den jeweils eingestellten Beleuchtungshelligkeiten $P_k$ sowie der erwähnten Kopplungsmatrix M. Einzelheiten hierzu wurden bereits oben erläutert.

In dem genannten Schritt S3 werden mit Vorteil auch die Bleichkoeffizienten $\kappa_j$ berechnet. Dies ist, wie oben bereits betont, ein Gesichtspunkt, der zusätzlich, aber auch unabhängig von "Cross-Excitation" bzw. "Cross-Emisson" Anwendung finden kann, um optimale Beleuchtungshelligkeiten zu ermitteln. Dies kann durch den Vergleich der detektierten $c_j$ in während der Optimierung aufgenommenen aufeinanderfolgenden Bildern geschehen, die entsprechend eines mathematischen Modells ausgewertet werden. Aufgrund der relativen Messung der $c_j$ zueinander kann so je nach Ausgestaltung des Modells z. B. aus zwei aufeinanderfolgenden Bildaufnahmen und den dazugehörigen Beleuchtungshelligkeiten ein Modell 0. Ordnung parametrisiert werden, oder aus N aufeinanderfolgenden Bildaufnahmen und Beleuchtungshelligkeiten ein Modell der Ordnung N-2. Von besonderer Bedeutung ist ein lineares Modell, das mit Hilfe gängiger mathematischer Methoden aus drei aufeinanderfolgenden Bildaufnahmen und Beleuchtungshelligkeiten parametrisiert werden kann. Aus den jeweils bestimmten Bleichkoeffizienten lässt sich nach endgültiger Einstellung der Beleuchtungshelligkeiten dann eine bestimmte Bleichkinetik pro Fluorophor berechnen, aus der dann wiederum ein maximaler Bleichwert bestimmt werden kann, der dem Parameter "Probenschonung" zugrunde gelegt wird.

Im darauf folgenden Schritt S4 wird die Jacobi-Matrix der integralen Intensität pro Fluorophor gemäß Gleichung (8) berechnet. Anschließend wird im Schritt S5 geprüft, ob diese Jacobi-Matrix leere Zeilen (das entsprechende Fluorophor ist nicht im Bild) oder leere Spalten (die entsprechende Lichtquelle hat keinen Einfluss auf die Anzahl der detektierten Photoelektronen) besitzt. Sollte dies der Fall sein, werden die entsprechenden Zeilen (Fluorophore) bzw. Spalten (Lichtquellen) eliminiert, d.h. zur Vereinfachung des Rechenaufwands nicht mehr weiter betrachtet. Sollte der Schritt S5 zu keinem Ergebnis führen, wird mit dem Schritt S7 fortgeführt, bei dem neue Einstellungen der Beleuchtungshelligkeiten gemäß Gleichung (9) vorgenommen werden.

Danach werden im Schritt S8 aufgestellte Abbruchkriterien geprüft, wie sie weiter oben bereits ausführlich erläutert worden sind. Sollte keines der Abbruchkriterien erfüllt sein, wird zum nächsten Schritt n +1 des Iterationsverfahrens gegangen, d.h. das Flussdiagramm gemäß Figur 3 kehrt zum Schritt S2 zurück. Sollte hingegen eines der Abbruchkriterien erfüllt sein, startet im Schritt S9 die Haupt-Bildaufnahme mit den ermittelten und eingestellten Beleuchtungshelligkeiten $P_k$ der Lichtquellen $120_k$.

Das hier vorgestellte Verfahren zur Einstellung der genannten Parameter bei einem Fluoreszenzmikroskop ist sehr benutzerfreundlich, da es intuitiv arbeitet und keine technischen Vorkenntnisse verlangt und automatisch die entsprechenden Einstellungen vornimmt. Auch bildet es den technischen Parameterraum der Einstellgrößen auf für den Benutzer wichtige Größen des biologischen Experiments ab.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

Einige Ausführungsbeispiele beziehen sich auf ein Mikroskop, das ein System umfasst, wie in Verbindung mit einer oder mehrerer der Figuren beschrieben. Alternativ kann ein Mikroskop Teil eines Systems sein oder mit demselben verbunden sein. Fig. 1 zeigt eine schematische Darstellung eines Systems, das ausgebildet ist zum Ausführen eines hierin beschriebenen Verfahrens. Das System umfasst ein Mikroskop 100 und ein Computersystem bzw. eine Recheneinheit 150. Das Mikroskop 100 ist ausgebildet zum Aufnehmen von Bildern und ist mit dem Computersystem 150 verbunden. Das Computersystem ist ausgebildet zum Ausführen von zumindest einem Teil eines hierin beschriebenen Verfahrens. Das Computersystem kann ausgebildet sein zum Ausführen eines Maschinenlern-Algorithmus. Das Computersystem und das Mikroskop können getrennte Einheiten sein, können aber auch zusammen in einem gemeinsamen Gehäuse integriert sein. Das Computersystem könnte Teil eines zentralen Verarbeitungssystems des Mikroskops sein und/oder das Computersystem könnte Teil einer Teilkomponente des Mikroskops sein, wie eines Sensor, eines Aktuator, einer Kamera oder einer Beleuchtungseinheit, usw. des Mikroskops.

Das Computersystem kann eine lokale Computervorrichtung (z. B. Personalcomputer, Laptop, Tablet-Computer oder Mobiltelefon) mit einem oder mehreren Prozessoren und einer oder mehreren Speichervorrichtungen oder kann ein verteiltes Computersystem (z. B. ein Cloud-Computing-System mit einem oder mehreren Prozessoren oder einer oder mehreren Speichervorrichtungen, die an verschiedenen Stellen verteilt sind, zum Beispiel an einem lokalen Client und/oder einer oder mehreren Remote-Server-Farms und/oder Datenzentren) sein. Das Computersystem kann irgendeine Schaltung oder Kombination von Schaltungen umfassen. Bei einem Ausführungsbeispiel kann das Computersystem einen oder mehrere Prozessoren umfassen, die von irgendeinem Typ sein können. Nach hiesigem Gebrauch kann Prozessor irgendein Typ von Rechenschaltung bedeuten, wie beispielsweise, aber nicht beschränkt auf, ein Mikroprozessor, ein Mikrocontroller, ein Mikroprozessor mit komplexem Befehlssatz (CISC), ein Mikroprozessor mit reduziertem Befehlssatz (RISC), ein Sehr-langes-Anweisungswort- (Very Long Instruction Word; VLIW) Mikroprozessor, ein Graphikprozessor, ein digitaler Signalprozessor (DSP), ein Multi-Core-Prozessor, ein feld-programmierbares Gate-Array (FPGA), z.B. eines Mikroskops oder einer Mikroskopkomponente (z. B. Kamera) oder irgendein anderer Typ von Prozessor oder Verarbeitungsschaltung. Andere Typen von Schaltungen, die in dem Computersystem umfasst sein können, können eine speziell angefertigte Schaltung, eine anwendungsspezifische integrierte Schaltung (ASIC) oder Ähnliches, wie beispielsweise eine oder mehrere Schaltungen (z. B. eine Kommunikationsschaltung) zur Verwendung bei drahtlosen Vorrichtungen wie z. B. Mobiltelefonen, Tablet-Computern, Laptop-Computern, Funksprechgeräten und ähnlichen elektronischen Systemen sein. Das Computersystem kann eine oder mehrere Speichervorrichtungen umfassen, die ein oder mehrere Speicherelemente umfassen können, die für die jeweilige Anwendung geeignet sind, wie beispielsweise einen Hauptspeicher in der Form eines Direktzugriffsspeichers (RAM, Random Access Memory), eine oder mehrere Festplatten und/oder ein oder mehrere Laufwerke, die entfernbare Medien, wie beispielsweise CDs, Flash-Speicherkarten, DVD und Ähnliches handhaben. Das Computersystem kann auch eine Anzeigevorrichtung, einen oder mehrere Lautsprecher, und eine Tastatur und/oder Steuerung umfassen, die eine Maus, Trackball, Touchscreen, Stimmerkennungsvorrichtung oder irgendeine andere Vorrichtung umfassen kann, die es einem Systemnutzer erlaubt, Information in das Computersystem einzugeben und Information von demselben zu empfangen.

Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nicht-flüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Eine weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

Bezugszeichenliste

| | |
|---|---|
| 100 | Fluoreszenzmikroskop |
| 110 | Probe |
| $120_k$ | Lichtquellen; k = 0,..., K -1 |
| $130_j$ | Fluorophore; j = 0,..., J -1 |
| $140_i$ | Detektoren ; i = 0,..., I -1 |
| 150 | Recheneinheit |
| 160 | Objektiv |
| 162 | Detektionsstrahlengang |
| 164 | Beleuchtungsstrahlengang |
| 166 | spektrales Teilerelement |
| $P_k$ | Beleuchtungshelligkeit |
| $c_j$ | Fluorophorkonzentration; j = 0,..., J -1 |
| $d_2$ | Bereich für Parameter "Bildqualität" |

S1-S9    Verfahrensschritte

**Patentansprüche**

1. Verfahren zum automatischen Ermitteln von einzustellenden Beleuchtungshelligkeiten ($P_k$) von mindestens zwei Lichtquellen ($120_k$) zur Anregung jeweils mindestens eines Fluorophors ($130_j$) in einer in einem Fluoreszenzmikroskop (100) abzubildenden Probe (110),

   wobei jede der mindestens zwei Lichtquellen ($120_k$) einzeln bezüglich ihrer Beleuchtungshelligkeit ($P_k$) ansteuerbar ist, und
   wobei mindestens zwei Detektoren ($140_i$) jeweils eine Bildintensität ($I_i$) der mikroskopisch abgebildeten Probe (110) detektieren,
   wobei die einzustellenden Beleuchtungshelligkeiten ($P_k$) der mindestens zwei Lichtquellen ($120_k$) automatisch derart ermittelt werden, dass ein vorgegebener Sollwert eines Signal-zu-Rauschverhältnisses pro Fluorophor ($130_j$) erreicht wird, wobei zur Ermittlung der Beleuchtungshelligkeiten ($P_k$) der mindestens zwei Lichtquellen ($120_k$) ein Übersprechen eines Detektors für unterschiedliche Emissionsspektren der Fluorophore ($130_j$) und/oder eine Kreuzanregung eines Fluorophors ($130_j$) für unterschiedliche Beleuchtungsspektren der Lichtquellen ($120_k$) berücksichtigt wird,
   wobei das Signal-zu-Rauschverhältnis pro Fluorophor ($130_j$) in Abhängigkeit von mindestens einer von mindestens einem der Detektoren ($140_i$) detektierten Bildintensität ($I_j$) pro Fluorophor ($130_j$) ermittelt wird,
   wobei das Signal-zu-Rauschverhältnis pro Fluorophor ($130_j$) in Abhängigkeit von einer von mindestens einem der mindestens zwei Detektoren ($140_i$) detektierten Bildintensität ($I_j$) pro Fluorophor ($130_j$) aufgrund Anregung des jeweiligen Fluorophors ($130_j$) durch die mindestens zwei Lichtquellen ($120_k$) ermittelt wird, und/oder
   wobei das Signal-zu-Rauschverhältnis pro Fluorophor ($130_j$) in Abhängigkeit von den von den mindestens zwei Detektoren ($140_i$) detektierten Bildintensitäten ($I_j$) pro Fluorophor ($130_j$) ermittelt wird.

2. Verfahren nach Anspruch 1, wobei zur Ermittlung der Beleuchtungshelligkeiten ($P_k$) der mindestens zwei Lichtquellen ($120_k$) zunächst jeweils ein Initialwert ($P_k°$) der Beleuchtungshelligkeit für jede der Lichtquellen ($120_k$) vorgegeben wird und die zugehörigen Bildintensitäten ($I_j°$) gemessen und das zugehörige Signal-zu-Rauschverhältnis pro Fluorophor berechnet wird, wobei anschließend in einem Iterationsverfahren sukzessiv die Werte der Beleuchtungshelligkeiten ($P_k$) solange verändert werden, bis der vorgegebene Sollwert des Signal-zu-Rauschverhältnisses pro Fluorophor erreicht ist.

3. Verfahren nach einem der Ansprüche 1 bis 2, wobei bei der Ermittlung der Beleuchtungshelligkeiten ($P_k$) der mindestens zwei Lichtquellen ($120_k$) eine Bildverstärkung der mindestens zwei Detektoren ($140_i$) berücksichtigt wird.

4. Verfahren nach einem der Ansprüche 1 bis 3, wobei zur Ermittlung der Beleuchtungshelligkeit ($P_k$) der mindestens zwei Lichtquellen ($120_k$) eine Belichtungszeit ($\tau$) für jeden der Detektoren ($140_i$) berücksichtigt wird.

5. Verfahren nach Anspruch 4, wobei die Belichtungszeit ($\tau$) für jeden der Detektoren ($140_i$) konstant gehalten wird, und/oder
   wobei die Belichtungszeit ($\tau$) in Abhängigkeit von einer Bildverstärkung eines Detektors ($140_i$) bestimmt wird.

6. Verfahren nach einem der vorhergehenden Ansprüche, wobei die Detektoren ($140_i$) simultan ausgelesen werden.

7. Verfahren nach einem der vorhergehenden Ansprüche, wobei während der Ermittlung der Beleuchtungshelligkeiten ($P_k$) der mindestens zwei Lichtquellen ($120_k$) ein Bleichkoeffizient ($\kappa_j$) pro Fluorophor ($130_j$) zumindest näherungsweise mathematisch bestimmt wird.

8. Verfahren nach Anspruch 7, wobei aus dem bestimmten Bleichkoeffizient ($\kappa_j$) ein maximaler Bleichwert und/oder eine Zeitdauer bis zum Erreichen eines maximalen Bleichwertes pro Fluorophor ($130_j$) ermittelt wird.

9. Verfahren nach Anspruch 8, wobei anhand des ermittelten maximalen Bleichwertes ein Abbruchkriterium für die Abbildung der Probe (110) in Bezug auf das entsprechende Fluorophor ($130_j$) aufgestellt wird
   wobei das Abbruchkriterium insbesondere vorsieht, dass die Beleuchtungshelligkeiten ($P_k$) der entsprechenden Lichtquellen ($120_k$) abgesenkt werden, wobei optional die Bildverstärkung des entsprechenden Detektors ($140_i$) erhöht wird.

**10.** Verfahren nach einem der vorhergehenden Ansprüche, wobei die detektierte Bildintensität ($I_j$) nicht beeinflussende Fluorophore ($130_j$) und/oder Lichtquellen ($120_k$) während der Ermittlung der Beleuchtungshelligkeiten ($P_k$) bestimmt werden.

**11.** Verfahren nach einem der vorhergehenden Ansprüche, wobei zur Ermittlung der Beleuchtungshelligkeiten ($P_k$) der mindestens zwei Lichtquellen ($120_k$) infolge eines Objektivwechsels in dem Fluoreszenzmikroskop ($100$) eine Änderung der detektierten Bildintensitäten ($I_j$) aufgrund dieses Objektivwechsels berücksichtigt wird.

**12.** Recheneinheit ($150$) für ein Fluoreszenzmikroskop nach einem der Ansprüche 14 oder 15, die dazu eingerichtet ist, ein Verfahren nach einem der Ansprüche 1 bis 11 auszuführen.

**13.** Computerprogramm mit Programmcode zur Ausführung eines Verfahrens nach einem der Ansprüche 1 bis 11, wenn das Computerprogramm auf einer Recheneinheit ($150$) gemäß Anspruch 12 ausgeführt wird.

**14.** Fluoreszenzmikroskop ($100$) mit

mindestens zwei Lichtquellen ($120_k$) zur Anregung jeweils mindestens eines Fluorophors ($130_j$) in einer mittels des Fluoreszenzmikroskops ($100$) abzubildenden Probe ($110$),
wobei jede der mindestens zwei Lichtquellen ($120_k$) einzeln bezüglich ihrer Beleuchtungshelligkeit ($P_k$) an-steuerbar ist, mit
mindestens zwei Detektoren ($140_i$) zur Detektion jeweils einer Bildintensität ($I_j$) der mikroskopisch abgebildeten Probe ($110$), und mit
einer Recheneinheit ($150$), die eingerichtet ist, ein Verfahren nach einem der Ansprüche 1 bis 11 auszuführen, und die ferner zur Ermittlung der einzustellenden Beleuchtungshelligkeiten ($P_k$) derart eingerichtet ist, dass ein vorgegebener Sollwert eines Signal-zu-Rauschverhältnisses pro Fluorophor ($130_j$) erreicht wird, wobei zur Ermittlung der Beleuchtungshelligkeiten ($P_k$) der mindestens zwei Lichtquellen ($120_k$) ein Übersprechen eines Detektors für unterschiedliche Emissionsspektren der Fluorophore ($130_j$) und/oder eine Kreuzanregung eines Fluorophors ($130_j$) für unterschiedliche Beleuchtungsspektren der Lichtquellen ($120_k$) berücksichtigt wird.

**15.** Fluoreszenzmikroskop ($100$) nach Anspruch 14 mit

Mitteln zum Einstellen der Beleuchtungshelligkeiten ($P_k$) der mindestens zwei Lichtquellen ($120_k$),
wobei die Recheneinheit ($150$) mit den mindestens zwei Detektoren ($140_i$) und den Mitteln zum Einstellen der Beleuchtungshelligkeiten ($P_k$) in Kommunikationsverbindung steht, um die ermittelten Beleuchtungshelligkeiten ($P_k$) der mindestens zwei Lichtquellen ($120_k$) einzustellen.

**Claims**

**1.** A method for automatically determining adjustable illumination brightnesses ($P_k$) from at least two light sources ($120_k$) for exciting at least one fluorophore ($130_j$) in a sample ($110$) to be imaged in a fluorescence microscope ($100$),

wherein each of the at least two light sources ($120_k$) can be individually controlled with respect to its illumination brightness ($P_k$), and
wherein at least two detectors ($140_i$) each detect an image intensity ($I_j$) of the microscopically imaged sample ($110$),
wherein the adjustable illumination brightnesses ($P_k$) of the at least two light sources ($120_k$) are automatically determined in such a way that a predetermined target value of a signal-to-noise ratio per fluorophore ($130_j$) is achieved,
wherein, to determine the illumination brightnesses ($P_k$) of the at least two light sources ($120_k$), crosstalk of a detector for different emission spectra of the fluorophores ($130_j$) and/or cross excitation of a fluorophore ($130_j$) for different illumination spectra of the light sources ($120_k$) is taken into account,
wherein the signal-to-noise ratio per fluorophore ($130_j$) is determined as a function of at least one image intensity ($I_j$) per fluorophore ($130_j$), detected by at least one of the detectors ($140_i$),
wherein the signal-to-noise ratio per fluorophore ($130_j$) is determined as a function of an image intensity ($I_j$) per fluorophore ($130_j$), detected by at least one of the at least two detectors ($140_i$) due to excitation of the respective fluorophore ($130_j$) by the at least two light sources ($120_k$), and/or
wherein the signal-to-noise ratio per fluorophore ($130_j$) is determined as a function of the image intensities ($I_j$) per

fluorophore $(130_j)$, detected by the at least two detectors $(140_i)$.

2. The method according to claim 1, wherein, to determine the illumination brightnesses $(P_k)$ of the at least two light sources $(120_k)$, first an initial value $(P_k°)$ of the illumination brightness is specified for each of the light sources $(120_k)$ and the associated image intensities $(I_j°)$ are measured and the associated signal-to-noise ratio per fluorophore is calculated, wherein, afterwards in an iterative process, the values of the illumination brightnesses $(P_k)$ are successively changed until the specified target value of the signal-to-noise ratio per fluorophore is reached.

3. The method according to any one of claims 1 to 2, wherein an image amplification of the at least two detectors $(140_1)$ is taken into account when determining the illumination brightnesses $(P_k)$ of the at least two light sources $(120_k)$.

4. The method according to any one of claims 1 to 3, wherein an exposure time $(\tau)$ for each of the detectors $(140_i)$ is taken into account to determine the illumination brightness $(P_k)$ of the at least two light sources $(120_k)$.

5. The method according to claim 4, wherein the exposure time $(\tau)$ for each of the detectors $(140_i)$ is kept constant, and/or wherein the exposure time $(\tau)$ is determined as a function of an image gain of a detector $(140_i)$.

6. The method according to any one of the preceding claims, wherein the detectors $(140_i)$ are read out simultaneously.

7. The method according to any one of the preceding claims, wherein, during the determination of the illumination brightnesses $(P_k)$ of the at least two light sources $(120_k)$, a bleaching coefficient $(k_j)$ per fluorophore $(130_j)$ is determined at least approximately mathematically.

8. The method according to claim 7, wherein a maximum bleaching value and/or a time period until a maximum bleaching value is reached per fluorophore $(130_j)$ is determined from the determined bleaching coefficient $(\kappa_j)$.

9. The method according to claim 8, wherein a termination criterion for the imaging of the sample (110) with respect to the corresponding fluorophore $(130_j)$ is established based on the determined maximum bleaching value wherein the termination criterion provides in particular that the illumination brightnesses $(P_k)$ of the corresponding light sources $(120_k)$ are reduced, wherein optionally the image gain of the corresponding detector $(140_1)$ is increased.

10. The method according to any one of the preceding claims, wherein fluorophores $(130_j)$ and/or light sources $(120_k)$ which do not influence the detected image intensity $(I_j)$ are determined during the determination of the illumination brightnesses $(P_k)$.

11. The method according to any one of the preceding claims, wherein, in order to determine the illumination brightnesses $(P_k)$ of the at least two light sources $(120_k)$ as a result of a change of objective in the fluorescence microscope (100), a change in the detected image intensities $(I_j)$ due to this change of objective is taken into account.

12. A computing unit (150), configured to execute a method according to any one of claims 1 to 11.

13. A computer program with program code for executing a method according to any one of claims 1 to 11, when the computer program is executed on a processor, in particular on the computing unit (150) according to claim 17.

14. A fluorescence microscope (100) with at least two light sources $(120_k)$ for exciting at least one fluorophore $(130_j)$ in a sample (110) to be imaged by means of the fluorescence microscope (100), wherein each of the at least two light sources $(120_k)$ is individually controllable with respect to its illumination brightness $(P_k)$, with at least two detectors $(140_1)$ for detecting an image intensity $(I_j)$ of the microscopically imaged sample (110), and with a computing unit (150) according to claim 12 for determining the adjustable illumination brightnesses $(P_k)$ such that a predetermined target value of a signal-to-noise ratio per fluorophore $(130_j)$ is achieved, wherein, in order to determine the illumination brightnesses $(P_k)$ of the at least two light sources $(120_k)$, crosstalk of a detector for different emission spectra of the fluorophores $(130_j)$ and/or cross-excitation of a fluorophore $(130_j)$ for different illumination spectra of the light sources $(120_k)$ is taken into account.

15. The fluorescence microscope (100) according to claim 14, with means for adjusting the illumination brightnesses $(P_k)$ of the at least two light sources $(120_k)$, wherein the computing unit (150) is in communication with the at least two detectors $(140_i)$ and with the means for adjusting the illumination brightnesses $(P_k)$, in order to adjust the determined illumination brightnesses $(P_k)$ of the at least two light sources $(120_k)$.

**Revendications**

1. Procédé de détermination automatique de luminosités d'éclairage ($P_k$) à régler d'au moins deux sources de lumière ($120_k$) pour exciter respectivement au moins un fluorophore ($130_j$) dans un échantillon (110) à reproduire dans un microscope à fluorescence (100), dans lequel chacune desdites au moins deux sources de lumière ($120_k$) est apte à être pilotée individuellement en ce qui concerne sa luminosité d'éclairage ($P_k$), et

   dans lequel au moins deux détecteurs ($140_i$) détectent chacun une intensité d'image ($I_i$) de l'échantillon (110) reproduit au microscope,
   dans lequel les luminosités d'éclairage ($P_k$) à régler desdites au moins deux sources de lumière ($120_k$) sont déterminées automatiquement de manière à atteindre une valeur de consigne prédéfinie d'un rapport signal/bruit par fluorophore ($130_j$),
   dans lequel une diaphonie d'un détecteur pour différents spectres d'émission des fluorophores ($130_j$) et/ou une excitation croisée d'un fluorophore ($130_j$) pour différents spectres d'éclairage des sources de lumière ($120_k$) sont prises en compte pour déterminer les luminosités d'éclairage ($P_k$) desdites au moins deux sources de lumière ($120_k$),
   dans lequel le rapport signal/bruit par fluorophore ($130_j$) est déterminé par fluorophore ($130_j$) en fonction d'au moins une intensité d'image ($I_i$) détectée par au moins un des détecteurs ($140i$),
   dans lequel le rapport signal/bruit par fluorophore ($130_j$) est déterminé par fluorophore ($130_j$) en fonction d'une intensité d'image ($I_i$) détectée par au moins un desdits au moins deux détecteurs ($140_i$) en raison de l'excitation du fluorophore ($130_j$) respectif par lesdites au moins deux sources de lumière ($120_k$), et/ou
   dans lequel le rapport signal/bruit par fluorophore ($130_j$) est déterminé en fonction des intensités d'image ($I_j$) détectées par fluorophore ($130_j$), par lesdits au moins deux détecteurs ($140i$).

2. Procédé selon la revendication 1, dans lequel, pour déterminer les luminosités d'éclairage ($P_k$) desdites au moins deux sources de lumière ($120_k$), une valeur initiale ($P_k°$) de la luminosité d'éclairage est d'abord spécifiée respectivement pour chacune des sources de lumière ($120_k$) et les intensités d'image ($I_j°$) associées sont mesurées et le rapport signal/bruit associé par fluorophore est calculé, dans lequel les valeurs des luminosités d'éclairage ($P_k$) sont ensuite modifiées successivement dans un procédé d'itération jusqu'à ce que la valeur de consigne spécifiée du rapport signal/bruit par fluorophore soit atteinte.

3. Procédé selon l'une quelconque des revendications 1 et 2, dans lequel une amplification d'image desdits au moins deux détecteurs ($140_1$) est prise en compte lors de la détermination des luminosités d'éclairage ($P_k$) desdites au moins deux sources de lumière ($120_k$).

4. Procédé selon l'une quelconque des revendications 1 à 3, dans lequel un temps d'exposition ($\tau$) pour chacun des détecteurs ($140_1$) est pris en compte pour déterminer la luminosité d'éclairage ($P_k$) desdites au moins deux sources de lumière ($120_k$).

5. Procédé selon la revendication 4, dans lequel le temps d'exposition ($\tau$) est maintenu constant pour chacun des détecteurs ($140_i$), et/ou
   dans lequel le temps d'exposition ($\tau$) est déterminé en fonction d'une amplification d'image d'un détecteur ($140_i$).

6. Procédé selon l'une quelconque des revendications précédentes, dans lequel les détecteurs ($140_i$) sont lus simultanément.

7. Procédé selon l'une quelconque des revendications précédentes, dans lequel un coefficient de blanchiment ($\kappa_j$) par fluorophore ($130_j$) est défini au moins approximativement mathématiquement pendant la détermination des luminosités d'éclairage ($P_k$) desdites au moins deux sources de lumière ($120_k$).

8. Procédé selon la revendication 7, dans lequel une valeur de blanchiment maximale et/ou une durée jusqu'à l'atteinte d'une valeur de blanchiment maximale par fluorophore ($130_i$) est déterminée à partir du coefficient de blanchiment défini ($\kappa_j$).

9. Procédé selon la revendication 8, dans lequel, sur la base de la valeur de blanchiment maximale déterminée, un critère d'interruption est établi pour la reproduction de l'échantillon (110) par rapport au fluorophore ($130_j$) correspondant,
   dans lequel le critère d'interruption prévoit en particulier que les luminosités d'éclairage ($P_k$) des sources de lumière

($120_k$) correspondantes sont abaissées, dans lequel en option l'amplification d'image du détecteur ($140_i$) correspondant est augmentée.

10. Procédé selon l'une quelconque des revendications précédentes, dans lequel des fluorophores ($130_j$) et/ou des sources de lumière ($120_k$) n'influençant pas l'intensité d'image détectée ($I_j$) sont définis pendant la détermination des luminosités d'éclairage ($P_k$).

11. Procédé selon l'une quelconque des revendications précédentes, dans lequel, pour déterminer les luminosités d'éclairage ($P_k$) desdites au moins deux sources de lumière ($120_k$) à la suite d'un changement d'objectif dans le microscope à fluorescence (100), une modification des intensités d'image détectées ($I_j$) est prise en compte en raison dudit changement d'objectif.

12. Unité de calcul (150), qui est conçue pour mettre en œuvre un procédé selon l'une des revendications 1 à 11.

13. Programme informatique avec un code de programme pour mettre en œuvre un procédé selon l'une des revendications 1 à 11, lorsque le programme informatique est exécuté sur un processeur, en particulier sur l'unité de calcul (150) selon la revendication 17.

14. Microscope à fluorescence (100) ayant au moins deux sources de lumière ($120_k$) pour exciter respectivement au moins un fluorophore ($130_j$) dans un échantillon (110) à reproduire au moyen du microscope à fluorescence (100),

dans lequel chacune desdites au moins deux sources de lumière ($120_k$) est apte à être pilotée individuellement, en ce qui concerne leur luminosité d'éclairage ($P_k$), au moyen d'au moins deux détecteurs ($140_i$), de façon à détecter respectivement une intensité d'image ($I_j$) de l'échantillon (110) reproduit au microscope,
et comprenant une unité de calcul (150) selon la revendication 12 pour déterminer les luminosités d'éclairage ($P_k$) à régler de telle manière qu'une valeur de consigne spécifiée d'un rapport signal/bruit par fluorophore ($130_j$) est atteinte ;
dans lequel, pour déterminer les luminosités d'éclairage ($P_k$) desdites au moins deux sources de lumière ($120_k$), une diaphonie d'un détecteur pour différents spectres d'émission des fluorophores ($130_j$) et/ou une excitation croisée d'un fluorophore ($130_j$) pour différents spectres d'éclairage des sources de lumière ($120_k$) sont prises en compte.

15. Microscope à fluorescence (100) selon la revendication 14 avec des moyens de réglage des luminosités d'éclairage ($P_k$) desdites au moins deux sources de lumière ($120_k$), dans lequel l'unité de calcul (150) est en communication avec les au moins deux détecteurs ($140_i$) et les moyens de réglage des luminosités d'éclairage ($P_k$) pour régler les luminosités d'éclairage ($P_k$) déterminées desdites au moins deux sources de lumière ($120_k$).

Fig. 1

Fig. 2

Fig. 3

**IN DER BESCHREIBUNG AUFGEFÜHRTE DOKUMENTE**

**In der Beschreibung aufgeführte Patentdokumente**

- US 10200625 B2
- EP 1795938 A1
- WO 0201222 A2